# EUROPEAN PATENT APPLICATION

(11) **EP 4 737 054 A1**
(43) Date of publication of application: **06.05.2026**
(21) Application number: 24895547.8
(22) Date of filing: 13.06.2024
(51) Int. Cl.: B23K 31/02, B23K 20/10, B23K 26/20

(54) **TAB WELDING MECHANISM AND BATTERY ASSEMBLY SYSTEM**

(30) Priority: 30.11.2023 CN 202311643694
(71) Applicant: Contemporary Amperex Technology Co., Limited, Ningde, Fujian 352100 (CN)
(72) Inventor: WU, Kai, Ningde, Fujian 352100 (CN); ZHANG, Yongli, Ningde, Fujian 352100 (CN); TANG, Wenxiang, Ningde, Fujian 352100 (CN); PAN, Wensheng, Ningde, Fujian 352100 (CN); HUANG, Qinkun, Ningde, Fujian 352100 (CN); ZHANG, Zhiguo, Ningde, Fujian 352100 (CN)
(74) Representative: Ziebig Hengelhaupt Intellectual Property Attorneys Patentanwaltskanzlei PartGmbB
(86) International application number: PCT/CN2024/099048
(87) International publication number: WO 2025/112444

(57) **Abstract**

A tab welding mechanism (10) and a battery assembly system (20). The tab welding mechanism (10) comprises a base platform (11), a support base (100), a tab pressing structure (200), and a welding assembly (300). The support base (100) is provided on the base platform (11) and is used for supporting and fixing a cell body (22a) of a battery cell (20a); the tab pressing structure (200) is provided on the base platform (11) and is configured to be capable of moving toward the support base (100), so as to press and gather a plurality of laminated tab pieces (211a) of the battery cell (20a); and the welding assembly (300) is provided on the base platform (11) and is configured to be capable of moving toward the support base (100), so as to weld the plurality of gathered tab pieces (211a) to form a tab portion (21a).

## Description

The present application claims priority to Chinese Patent Application No. 2023116436946 filed on November 30, 2023 and entitled "TAB WELDING MECHANISM AND BATTERY ASSEMBLY SYSTEM", the content of which is incorporated herein by reference in its entirety.

### TECHNICAL FIELD

The present application relates to the field of battery technologies, and in particular, to a tab welding mechanism and a battery assembly system.

### BACKGROUND

A battery refers to an apparatus that can convert chemical energy into electric energy, typically housed in a cup, a tank, or other containers, or a part of a composite container that contains an electrolyte solution and metal electrodes to generate a current. Thanks to advances in science and technology, batteries offering advantages such as portability, ease of charging and discharging operations, and stable long-term power supply are widely used in fields such as automobiles, household appliances, and aerospace.

In the prior art, during battery assembly, the tab plates, connected to the positive electrode and the negative electrode in the cell and led out therefrom, need to be welded and fixed to form a tab part, so as to facilitate the welding between the tab part and the post terminal. However, the tab plate welding process is complex, resulting in high manufacturing difficulty and reduced yield rate of the battery.

### SUMMARY

In view of the above issues, the present application provides a tab welding mechanism and a battery assembly system, which can address the challenges associated with the tab welding process and improve the yield rate of the battery.

In a first aspect, the present application provides a tab welding mechanism. The tab welding mechanism includes a base platform, a support base, a tab pressing structure, and a welding assembly. The support base is disposed on the base platform and is configured to support and fix a cell body of a cell; the tab pressing structure is disposed on the base platform and is configured to be capable of moving toward the support base, so as to press and gather a plurality of stacked tab plates of the cell; and the welding assembly is disposed on the base platform and is configured to be capable of moving toward the support base, so as to weld the plurality of gathered tab plates to form a tab part.

In the technical solutions of embodiments of the present application, the base platform is provided not only with the welding mechanism, but also with the support base and the tab pressing structure. This design enables the tab welding mechanism not only to weld the tab plates of the cell, but also to press and gather the tab plates by the tab pressing structure before welding. Thus, the spacing between the tab plates is reduced to compact the tab plates and facilitate the welding of the tab plates, thereby reducing the difficulty of welding and improving the yield rate of the cell. The support base can transport the cell to the position corresponding to the tab pressing structure or the welding assembly, thereby facilitating the pressing and welding of the tab plates of the cell, and also facilitating the transport of the cell to other positions after the tab plates are pressed and welded to form the tab part.

In some embodiments, the tab pressing structure includes a first assembly and a second assembly movably disposed on the base platform separately. The first assembly and the second assembly are configured to be capable of moving toward or away from each other. A clamping cavity is formed when the first assembly and the second assembly move toward each other, and the first assembly and the second assembly are configured to clamp the plurality of tab plates in the clamping cavity, so as to press and gather the plurality of tab plates.

By configuring the first assembly and the second assembly to cooperate with each other to be capable of moving toward or away from each other, the tab pressing structure can conveniently confine the tab plates in the clamping cavity, and press and gather the tab plates to compact the tab plates, thereby facilitating the subsequent welding of the tab plates.

In some embodiments, the first assembly includes a first driving unit and a first pressing plate. The first driving unit is mounted on the base platform, the first driving unit is in transmission connection to the first pressing plate, and the first driving unit is configured to drive the first pressing plate to move toward or away from the support base.

By configuring the first driving unit to drive the first pressing plate to move toward or away from the support base so as to move toward or away from the cell body of the cell on the support base, it facilitates the pressing and gathering of the tab plates on the cell by the first pressing plate, and it also facilitates the movement of the first pressing plate away from the tab part under the driving of the first driving unit after the tab plates are pressed and gathered, such that the first pressing plate does not affect the movement of the cell.

In some embodiments, the second assembly includes a second driving unit and a second pressing plate. The second driving unit is mounted on the base platform, the second driving unit is in transmission connection to the second pressing plate, and the second driving unit is configured to drive the second pressing plate to move toward or away from the support base. The first driving unit and the second driving unit are located on both sides of the support base, respectively, such that the first assembly and the second assembly can move toward or away from each other to form the clamping cavity with an adjustable dimension.

By configuring the second driving unit to drive the second pressing plate to move toward or away from the support base so as to move toward or away from the cell body of the cell on the support base, thereby enabling the first assembly and the second assembly to form the clamping cavity with an adjustable dimension, it can facilitate the cooperation between the first pressing plate and the second pressing plate to press and gather two side surfaces of the plurality of tab plates of the cell, thereby compacting the plurality of tab plates.

In some embodiments, the welding assembly includes a support frame, a first welding unit, and a second welding unit. The support frame is in transmission connection to the first driving unit; the first welding unit and the second welding unit are mounted on the support frame; the first welding unit and the second welding unit separately weld the plurality of tab plates from both sides of the plurality of tab plates.

By mounting the first welding unit and the second welding unit on the support frame, the first driving unit can simultaneously drive the first welding unit and the second welding unit to move toward the tab plates. Using the two welding units to separately and simultaneously weld both side surfaces of the tab plates can enable the tab plates to be more securely welded, thereby enhancing the welding effect of the tab plates and improving the welding efficiency of the tab plates.

In some embodiments, the first welding unit includes a first welding head and a first driving component. The first driving component is mounted on the support frame. The first driving component is in transmission connection to the first welding head and is configured to drive the first welding head to move toward or away from the support base.

By configuring the first driving component to be in transmission connection to the first welding head, the first welding head can move independently under the transmission of the first driving component, such that the first welding unit can adjust its position to align with one side of the plurality of tab plates, thereby achieving precise welding.

In some embodiments, the first pressing plate is provided with a first through hole facing the second pressing plate, and the first driving component is configured to drive an end part of the first welding head to enter the first through hole or move out of the first through hole. And/or the first pressing plate further includes a blowing structure. An air outlet of the blowing structure is disposed on a side of the first pressing plate facing the second pressing plate, and is configured to smooth the tab through air blowing.

By configuring the end part of the first welding head to be capable of entering and exiting the first through hole of the first pressing plate, the first welding head can weld the plurality of tab plates after the plurality of tab plates are gathered and compacted by the first pressing plate. In addition, during the welding process, the first pressing plate can fix the plurality of tab plates, such that the tab plates are not easily deformed, thereby facilitating the welding of one side of the plurality of tab plates by the first welding head. Providing the blowing structure to smooth the tab through air blowing can further regularize the shape of the tab.

In some embodiments, the second welding unit includes a second welding head and a second driving component. The second driving component is mounted on the support frame. The second driving component is in transmission connection to the second welding head and is configured to drive the second welding head to move toward or away from the support base.

By configuring the second driving component to be in transmission connection to the second welding head, the second welding head can move independently under the transmission of the second driving component, such that the second welding unit can adjust its position to align with one side of the plurality of tab plates, thereby achieving precise welding.

In some embodiments, the second pressing plate is provided with a second through hole facing the first pressing plate, and the second driving component is configured to drive an end part of the second welding head to enter the second through hole or move out of the second through hole.

By configuring the end part of the second welding head to be capable of entering and exiting the second through hole of the second pressing plate, the second welding head can weld the plurality of tab plates after the plurality of tab plates are gathered and compacted by the second pressing plate. In addition, during the welding process, the second pressing plate can fix the plurality of tab plates, such that the tab plates are not easily deformed, thereby facilitating the welding of one side of the plurality of tab plates by the second welding head.

In some embodiments, the welding assembly further includes a first dust extraction unit and a second dust extraction unit. The first dust extraction unit and the second dust extraction unit are configured to extract dust from a welding region of the first welding unit and a welding region of the second welding unit, respectively.

By providing the first dust extraction unit and the second dust extraction unit for the welding region of the first welding unit and the welding region of the second welding unit, respectively, debris and dust generated in the welding region can be absorbed, thereby reducing the adsorption of debris and dust on the tab part that could affect the use of the tab part and the subsequent processing procedures.

In some embodiments, the first driving unit is configured to drive the first pressing plate in three-dimensional directions.

By configuring the first pressing plate to be movable in three-dimensional directions (three directions), the accurate positioning of the tab plates by the first pressing plate can be facilitated, thereby pressing and gathering the tab plates.

In some embodiments, the first driving unit includes a first driving assembly, a second driving assembly, and a third driving assembly. The first driving assembly is in transmission connection to the first pressing plate and is configured to drive the first pressing plate to move in a first direction. The second driving assembly is in transmission connection to the first driving assembly and is configured to drive the first driving assembly to move in a second direction. The third driving assembly is in transmission connection to the second driving assembly and is configured to drive the second driving assembly to move in a third direction, so as to move toward or away from the support base. The first direction, the second direction, and the third direction are perpendicular to each other.

By disposing different driving assemblies in different directions and sequentially connecting these different driving assemblies, movement linkage among the three driving assemblies can be achieved, thereby easily enabling the first pressing plate to move in three directions.

In some embodiments, the second pressing plate includes a first mating surface, a second mating surface, and a third mating surface. The second mating surface and the first mating surface are arranged at an obtuse angle, and the third mating surface is arranged to be bent relative to the second mating surface. The first mating surface is configured to press against the cell body of the cell, the second mating surface is configured to cover a part of an end surface of the cell provided with the tab plates, and the third mating surface is configured to press the plurality of tab plates against the first pressing plate.

By disposing three mating surfaces adapted to the cell body of the cell and the plurality of tab plates on the second pressing plate, it facilitates the positioning of the plurality of tab plates by the second pressing plate based on the cell body of the cell, thereby more effectively pressing and gathering the plurality of tabs.

In some embodiments, the support base includes a conveying track and a cell fixture. The cell fixture is mounted on the conveying track, and the conveying track is configured to convey the cell fixture to the tab pressing structure and convey the cell fixture away from the tab pressing structure. The cell fixture is configured to support and fix the cell body of the cell.

By providing the conveying track and the cell fixture, the cell can be conveniently fixed on the conveying track, which makes the cell less likely to displace and fall off. This configuration also facilitates the conveyance of the cell to a welding station corresponding to the tab welding mechanism, thereby enabling the convenient welding of the tab plates.

In a second aspect, the present application provides a battery assembly system. The battery assembly system includes the tab welding mechanism according to the above embodiments.

In some embodiments, a battery includes a housing, a bottom cover, and a cell. The housing is provided with an open end, and a post terminal is disposed on a wall of the housing opposite to the open end. The post terminal is provided with a through hole, and the housing and the bottom cover are connected to form an accommodating cavity in communication with the through hole. An active substance-coated part of the cell is disposed in the housing, and a tab part of the cell passes through the through hole and is connected to a side of the post terminal facing away from the accommodating cavity. The battery assembly system further includes a conveying device and an assembly device. The conveying device is configured to convey structures to be assembled to each station of the assembly device. The stations of the assembly device at least include the tab welding mechanism. The tab welding mechanism is configured to weld a plurality of tab plates of the cell to form the tab part.

By disposing the tab welding mechanism in the battery assembly system, the plurality of tab plates of the cell can be welded to form the tab part, thereby facilitating the welding of the tab plates, reducing the welding difficulty, and improving the yield rate of the battery.

In some embodiments, the station of the assembly device further includes a housing insertion apparatus, a tab guide apparatus, a post terminal welding apparatus, and a bottom cover welding apparatus. The conveying device is configured to sequentially convey the cell having the tab part formed thereon to the housing insertion apparatus, the tab guide apparatus, the post terminal welding apparatus, and the bottom cover welding apparatus. The housing insertion apparatus is configured to insert the cell into the housing from the open end. The tab guide apparatus is configured to clamp the tab part to pass through the through hole when the cell is inserted into the housing. The post terminal welding apparatus is configured to weld the tab part that passes through the through hole to the side of the post terminal facing away from the accommodating cavity. The bottom cover welding apparatus is configured to weld the bottom cover to the open end of the housing.

By disposing the housing insertion apparatus, the tab guide apparatus, the post terminal welding apparatus, and the bottom cover welding apparatus in the battery assembly system, the process of assembling the battery in the battery assembly system can be smoother, thereby simplifying the assembly process of the battery, and improving the standardization and intelligence of the assembly process of the battery.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a battery cell according to some embodiments of the present application;
FIG. 2 is a schematic diagram of a part of the structure of a tab welding mechanism according to some embodiments of the present application;
FIG. 3 is a schematic diagram of a part of the structure of the embodiment of the tab welding mechanism shown in FIG. 2 from another perspective;
FIG. 4 is an enlarged schematic diagram of the region O in the embodiment of the tab welding mechanism shown in FIG. 2;
FIG. 5 is an enlarged schematic diagram of the region P in the embodiment of the tab welding mechanism shown in FIG. 3;
FIG. 6 is a schematic diagram of another part of the structure of a tab welding mechanism according to some embodiments of the present application;
FIG. 7 is a schematic structural diagram of a second assembly in a tab welding mechanism according to some embodiments of the present application;
FIG. 8 is a schematic structural diagram of a part of the region in a tab welding mechanism according to some other embodiments of the present application;
FIG. 9 is a schematic structural diagram of a side surface of a second pressing plate in the embodiment of the tab welding mechanism shown in FIG. 8;
FIG. 10 is a schematic diagram of an overall structure of a tab welding mechanism according to some embodiments of the present application;
FIG. 11 is a schematic structural diagram of a first driving unit in a tab welding mechanism according to some embodiments of the present application;
FIG. 12 is a schematic structural diagram of a support base in a tab welding mechanism according to some embodiments of the present application; and
FIG. 13 is a schematic structural block diagram of a battery assembly system according to some embodiments of the present application.

Reference numerals in the detailed description are as follows:
battery 1, housing 10a, cell 20a, accommodating cavity 11a, through hole 14a, tab 21a, post terminal 15a, open end 12a, bottom cover 30a, cell body 22a;
tab welding mechanism 10, base platform 11, support base 100, tab pressing structure 200, welding assembly 300, first assembly 210, second assembly 220, first driving unit 211, first pressing plate 212, first motor 2111, first reducer 2112, first lead screw 2113, first floating joint 2114, second driving unit 221, second pressing plate 222, clamping cavity 201, cylinder 2211, support frame 310, first welding unit 320, second welding unit 330, first welding head 321, first driving component 322, first through hole 2224, first cylinder 3221, blowing structure 2121, air outlet 2122; second welding head 331, second driving component 332, second cylinder 3321, second through hole 2123, first dust extraction unit 340, second dust extraction unit 350, first dust extraction port 341, second dust extraction port 351, first driving assembly 202, second driving assembly 203, third driving assembly 204, second motor 2115, second lead screw 2116, third motor 2117, third lead screw 2118, first linear slide rail 360, second linear slide rail 370, third linear slide rail 380, first mating surface 2221, second mating surface 2222, third mating surface 2223, conveying track 110, cell fixture 120, vertical driving module 130, horizontal driving module 140;
battery assembly system 20, conveying device 21, assembly device 22, conveying line 23, housing insertion apparatus 24, tab guide apparatus 25, post terminal welding apparatus 26, and bottom cover welding apparatus 27.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the art to which the present application belongs. The terms used herein are only used to describe specific embodiments and are not intended to limit the present application. The terms "include", "comprise", "have", and any variants thereof in the specification and claims of the present application and the above description of the drawings are intended to cover a non-exclusive inclusion.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technologies, battery cells are being applied in an increasing number of fields, and are gradually replacing traditional fossil energy in the field of automotive power. The battery cells can store chemical energy and controllably convert the chemical energy to electric energy. The rechargeable battery cells can continue to be used by activating the active material through charging after the battery is discharged.

In the prior art, during battery assembly, the tabs, connected to the positive electrode and the negative electrode in the cell and led out therefrom, need to be welded and fixed to form a tab part, so as to facilitate the welding between the tab part and the post terminal. However, the tab welding process is complex, resulting in high manufacturing difficulty and reduced yield rate of the battery. Especially when a plurality of electrode assemblies are stacked to form a cell, the tabs of the plurality of cells need to be welded together. However, the plurality of tabs of the plurality of electrode assemblies are prone to excessive gaps that may lead to weak welding.

To simplify the tab welding process and improve the welding efficiency and the yield rate of the battery, the cell may be positioned before welding to fix the tab. In addition, the tab may be pressed and compacted to form the tab part before welding, and then the tab part may be welded to the post terminal.

Based on the above considerations, the present application provides a tab welding mechanism and a battery assembly system. The tab welding mechanism includes a base platform, a support base, a tab pressing structure, and a welding assembly. The support base is disposed on the base platform and is configured to support and fix a cell body of a cell. The tab pressing structure is disposed on the base platform and is configured to be capable of moving toward the support base, so as to press and gather a plurality of stacked tab plates of the cell. The welding assembly is disposed on the base platform and is configured to be capable of moving toward the support base, so as to weld the plurality of gathered tab plates to form a tab part.

In the technical solutions of the embodiments of the present application, for the tab welding mechanism, the base platform is provided not only with the welding mechanism, but also with the support base and the tab pressing structure. This design enables the tab welding mechanism not only to weld the tab plates of the cell, but also to press and gather the tab plates before welding. Thus, the spacing between the tab plates is reduced to compact the tab plates and facilitate the welding of the tab plates, thereby reducing the difficulty of welding and improving the yield rate of the cell. The support base can transport the cell to the position corresponding to the tab pressing structure or the welding assembly, thereby facilitating the pressing and welding of the tab plates of the cell to form the tab part, and also facilitating the transport of the cell to other positions after the tab is pressed and welded.

An exemplary description of a battery 1 is provided below for illustrative purposes.

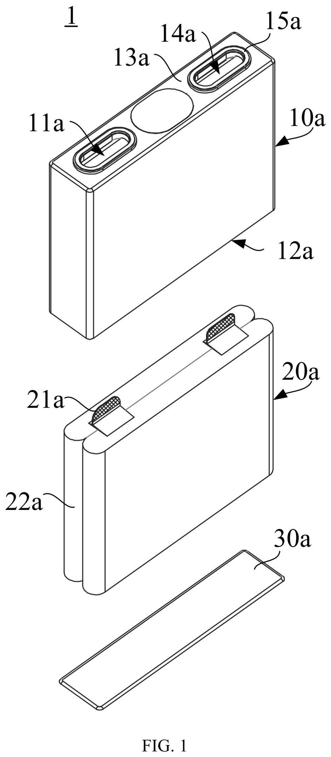

As shown in FIG. 1, the battery 1 refers to an apparatus that can convert chemical energy into electric energy, typically housed in a cup, a tank, or other containers, or a part of a composite container that contains an electrolyte solution and metal electrodes to generate a current. The battery 1 may be a battery pack or an energy storage apparatus. The energy storage apparatus includes an energy storage container, an energy storage electrical cabinet, and the like.

In some embodiments, the battery 1 may include a housing 10a, a bottom cover 30a, and a cell 20a. Certainly, the battery 1 may further include other functional components.

Specifically, the housing 10a may be provided with an open end 12a, and a post terminal 15a is disposed on a wall of the housing 10a that may be opposite to the open end 12a. The post terminal 15a may be provided with a through hole 14a, and the housing 10a and the bottom cover 30a are connected to form an accommodating cavity 11a in communication with the through hole 14a. An active substance-coated part of the cell 20a is disposed in the housing 10a, and a tab part 21a of the cell 20a passes through the through hole 14a and is connected to a side of the post terminal 15a facing away from the accommodating cavity 11a.

In some embodiments, the housing 10a is configured to encapsulate components such as the cell 20a and the electrolyte.

The cell 20a is a component that undergoes an electrochemical reaction in the battery 1. The cell 20a may also be referred to as an electrode assembly. The housing 10a may contain one or more cells 20a. One end of the cell 20a may be provided with a tab part 21a. The cell 20a is located in the accommodating cavity 11a, and the tab part 21a penetrates into the through hole 14a.

Optionally, the battery 1 may further include a bottom cover 30a. The bottom cover 30a is configured to be lidded onto the open end 12a, such that the cell 20a, once inserted into the housing, is less likely to fall out of the open end 12a.

The bottom cover 30a may be lidded onto the open end 12a of the housing 10a to isolate the internal environment of the battery 1 from components of the external environment. Without limitation, the shape of the bottom cover 30a may be adapted to the shape of the open end 12a to fit the housing 10a. Optionally, the bottom cover 30a may be made of a material with a certain hardness and strength (for example, an aluminum alloy), such that the bottom cover 30a is not easily deformed when being squeezed or collided. This enables the battery 1 to have higher structural strength, and the safety performance can also be improved.

The post terminal 15a may be disposed at the top 13a of the housing 10a. The post terminal 15a may be configured to be electrically connected to the cell 20a to output or input the electric energy of the battery 1. In some embodiments, the housing 10a may also be provided with a pressure relief mechanism for releasing the internal pressure when the internal pressure or temperature of the battery 1 reaches a threshold.

The housing 10a is a component configured to form the internal environment of the battery 1 in combination with the bottom cover 30a. The formed internal environment may be used to accommodate the cell 20a, the electrolytic solution, and other components. The housing 10a and the bottom cover 30a may be independent components. The housing 10a may be provided with an open end 12a, and the internal environment of the battery 1 is formed by lidding the open end 12a with the bottom cover 30a at the open end 12a. In other embodiments, the shape of the housing 10a may be determined based on the specific shape and dimension of the cell 20a. The housing 10a may be made of various materials, including but not limited to copper, iron, aluminum, stainless steel, aluminum alloy, and plastic.

In some embodiments, the cell 20a is provided with a tab part 21a and a cell body 22a. The tab part 21a can conduct current from the cell body 22a. The tab part 21a includes a positive electrode tab and a negative electrode tab. The positive electrode tab and the negative electrode tab may be jointly located at one end of the cell body 22a or located at both ends of the cell body 22a, respectively. During the charging and discharging of the battery, the positive electrode active substance and the negative electrode active substance react with the electrolytic solution, and the tab 21a is connected to the post terminal 15a to form a current circuit.

Optionally, the tab part 21a may be formed by welding a plurality of tab plates 211a. The plurality of tab plates 211a may be provided as copper sheets or aluminum sheets corresponding to the positive electrode tab or the negative electrode tab. Certainly, in other embodiments, the tab plate 211a may also be a metal material, such as a silver sheet or a nickel sheet.

In some embodiments, the cell body 22a includes a positive electrode, a negative electrode, and a separator. During the charging and discharging process of the cell 20a, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for the battery 1 may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn2O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, the negative electrode active material for the cell 20a well known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the cell body 22a further includes a separator. The separator is disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene difluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the cell 20a further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of dimethoxyethane, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the cell body 22a is of a wound structure. The positive electrode plate and the negative electrode plate are wound to form a wound structure. In some other embodiments, the cell body 22a may also be of a stacked structure, that is, a stacked structure formed by stacking the positive electrode plate and the negative electrode plate.

The present application provides a tab welding mechanism 10, which may be configured to weld the tab plates 211a of the cell 20a. Exemplarily, the welding process is a pre-welding process, in which an ultrasonic welding process is correspondingly adopted.

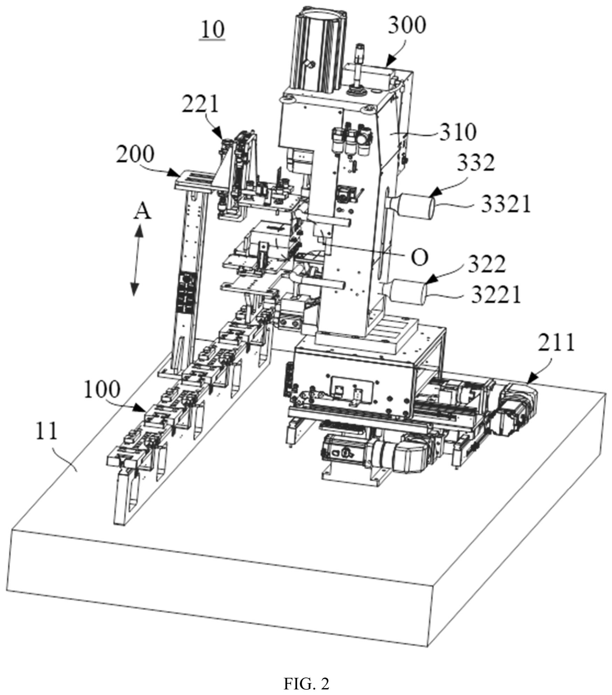

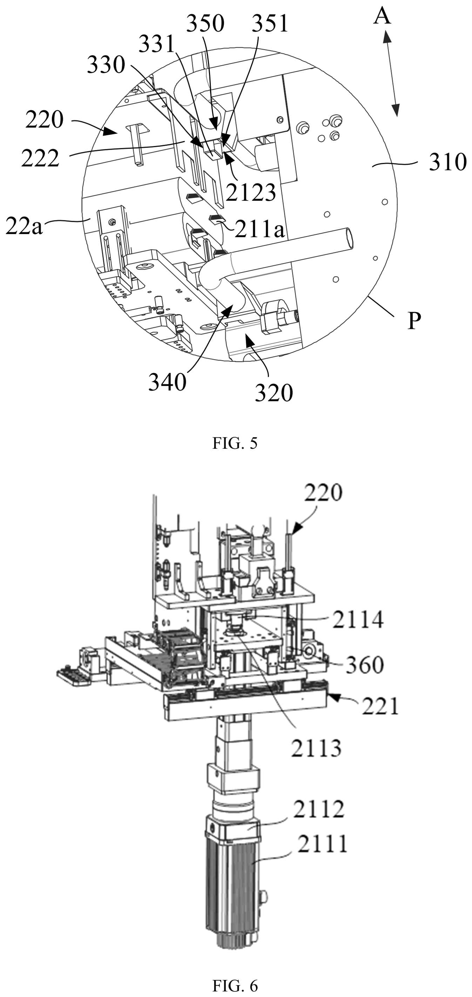

As shown in FIGs. 2 and 5, the tab welding mechanism 10 may include a base platform 11, a support base 100, a tab pressing structure 200, and a welding assembly 300.

The support base 100 may be disposed on the base platform 11 and is configured to support and fix the cell body 22a of the cell 20a. The tab pressing structure 200 may be disposed on the base platform 11 and is configured to be capable of moving toward the support base 100, so as to press and gather a plurality of stacked tab plates 211a of the cell 20a. The welding assembly 300 may be disposed on the base platform 11 and is configured to be capable of moving toward the support base 100, so as to weld the plurality of gathered tab plates 211a to form a tab part 21a.

Optionally, the disposition position of the tab pressing structure 200 on the base platform 11 and the disposition position of the welding assembly 300 on the base platform 11 may correspond to the position of the support base 100. When the support base 100 transports the cell body 22a of the cell 20a to a position corresponding to the tab pressing structure 200, the tab pressing structure 200 can move toward the tab plates 211a of the cell 20a on the support base 100, and is configured to press and gather the tab plates 211a of the cell 20a. The welding assembly 300 can weld the tab plates 211a, thereby forming a pressing and welding station at the position of the support base 100 corresponding to the tab pressing structure 200 and the welding assembly 300.

In this way, the support base 100 can conveniently transport the cell 20a to the pressing and welding station corresponding to the tab pressing structure 200 or the welding assembly 300, thereby facilitating the pressing and welding of the tab plates 211a of the cell 20a, and also facilitating the transport of the cell 20a to other positions after the tab plates 211a are pressed and welded to form the tab part 21a.

Since the tab plates 211a of the cell 20a are formed by stacking the metal lead-out plates from the negative electrode and the positive electrode of the cell 20a, disposing both the tab pressing structure 200 and the welding assembly 300 at the same position not only enables the tab welding mechanism 10 to weld the tab plates 211a of the cell 20a, but also facilitates the pressing and gathering of the tab plates 211a before welding. Thus, the spacing between the tab plates 211a is reduced to compact the tab plates 211a and facilitate the welding of the tab plates 211a, thereby reducing the difficulty of welding and improving the yield rate of the cell 20a.

In some embodiments of the present application, as shown in FIGs. 2 and 5, the tab pressing structure 200 may include a first assembly 210 and a second assembly 220 movably disposed on the base platform 11 separately. The first assembly 210 and the second assembly 220 may be configured to move toward or away from each other. A clamping cavity 201 may be formed when the first assembly 210 and the second assembly 220 move toward each other. The first assembly 210 and the second assembly 220 are configured to clamp the plurality of tab plates 211a in the clamping cavity 201, so as to press and gather the plurality of tab plates 211a.

Optionally, the first assembly 210 and the second assembly 220 may move toward or away from each other in a preset movement direction. When the tab plate 211a is conveyed to the pressing and welding station position by the support base 100, the tab plate 211a may be located between the first assembly 210 and the second assembly 220 in the preset movement direction. In this case, one side surface of the tab 21a may face the first assembly 210, and the other side surface of the tab 21a may face the second assembly 220. The preset movement direction may be as indicated by arrow A in the figure.

When the first assembly 210 and the second assembly 220 move toward each other, a clamping cavity 201 is formed, and the plurality of tab plates 211a are located in the clamping cavity 201. Therefore, when the first assembly 210 and the second assembly 220 gradually move toward each other, the first assembly and the second assembly cooperate with each other to clamp the plurality of tab plates 211a, so as to press and gather the plurality of tab plates 211a.

By means of the above configuration, the first assembly 210 and the second assembly 220 can move toward or away from each other, thus facilitating the confinement of the tab plates 211a in the clamping cavity 201 by the tab pressing structure 200, and the compaction of the tab plates 211a by pressing and gathering the tab plates 211a, thereby facilitating the subsequent welding of the tab plates 211a.

In some embodiments of the present application, as shown in FIGs. 2 to 4, the first assembly 210 may include a first driving unit 211 and a first pressing plate 212. The first driving unit 211 may be mounted on the base platform 11, the first driving unit 211 may be in transmission connection to the first pressing plate 212, and the first driving unit 211 may be configured to drive the first pressing plate 212 to move toward or away from the support base 100.

By configuring the first driving unit 211 to drive the first pressing plate 212 to move toward or away from the support base 100 so as to move toward or away from the cell body 22a of the cell 20a on the support base 100, it facilitates the pressing and gathering of the tab plates 211a on the cell body 22a by the first pressing plate 212, and it also facilitates the movement of the first pressing plate 212 away from the tab plates 211a under the driving of the first driving unit 211 after the tab plates 211a are compacted, such that the first pressing plate 212 does not affect the movement and transport of the battery 1.

Optionally, as shown in FIG. 6, the first driving unit 211 may include a first motor 2111, a first reducer 2112, a first lead screw 2113, and a first floating joint 2114. The first reducer 2112 may be connected to the first motor 2111, the first lead screw 2113 is connected to the first reducer 2112, and the first floating joint 2114 is connected to the first lead screw 2113.

Specifically, the first motor 2111 is used for the power supply apparatus that provides electric energy to other components of the first driving unit 211. The first reducer 2112 is a speed reduction transmission apparatus, and is configured to match the rotational speed and transmit torque between the first motor 2111 and the first lead screw 2113. The first lead screw 2113 is a movement mechanism capable of transmitting linear movement, which enables the first driving unit 211 to drive the first pressing plate 212 to move away from or toward the tab plates 211a. The first floating joint 2114 is configured to connect the first lead screw 2113 to the first pressing plate 212, such that the first lead screw 2113 can drive the first pressing plate 212 to move through transmission.

By means of the above configuration, configuring the first driving unit 211 as a lead screw transmission form enables the first driving unit 211 to drive the first pressing plate 212 more quickly, and ensures more precise movement of the first pressing plate 212. Therefore, the first pressing plate 212 can be aligned with the tab plates 211a, and the tab pressing structure 200 can quickly and precisely complete the pressing and gathering process of the tab plates 211a.

In some embodiments of the present application, as shown in FIGs. 2 to 7, the second assembly 220 may include a second driving unit 221 and a second pressing plate 222. The second driving unit 221 may be mounted on the base platform 11, and the second driving unit 221 may be configured to drive the second pressing plate 222 to move toward or away from the support base 100, so as to move toward or away from the cell 20a on the support base 100.

The first driving unit 211 and the second driving unit 221 are located on both sides of the support base 100, respectively, such that the first assembly 210 and the second assembly 220 can move toward or away from each other to form the clamping cavity 201 with an adjustable dimension.

For example, when the first driving unit 211 and the second driving unit 221 drive the first assembly 210 and the second assembly 220 to gradually move toward each other, respectively, the dimension of the clamping cavity 201 becomes smaller and smaller, and the first assembly 210 and the second assembly 220 further clamp and gather the tab plates 211a in the clamping cavity 201. After the tab plates 211a are compacted, the first assembly 210 and the second assembly 220 move away from each other, and the dimension of the clamping cavity 201 becomes larger and larger.

By means of the above configuration, the first driving unit 211 and the second driving unit 221 drive the first assembly 210 and the second assembly 220 to move toward each other and cooperate with each other to press and gather the tab plates 211a, which can improve the compaction effect of the tab plates 211a.

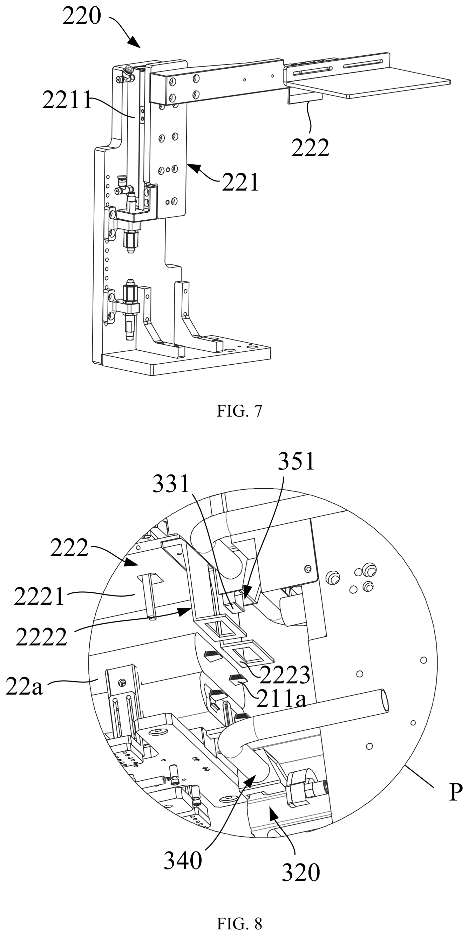

Optionally, as shown in FIGs. 2 and 7, the second driving unit 221 may include a cylinder 2211. The cylinder 2211 is connected to the second pressing plate 222. The cylinder 2211 refers to a cylindrical member that guides the piston to reciprocate linearly in the cylinder. Therefore, by connecting the cylinder 2211 to the second pressing plate 222, the cylinder 2211 can drive the second pressing plate 222 to reciprocate linearly toward or away from the support base 100, thereby enabling the pressing and shaping of the tab plates 211a. The cylinder 2211, simple in structure and low in cost, excels at driving other elements to reciprocate linearly, and is particularly suitable for the parallel conveyance of products and workpieces. Therefore, the use of the cylinder 2211 can standardize and systematize the process of pressing and gathering the tab plates 211a, reduce the cost of the tab pressing structure 200, and improve the reliability of the tab pressing structure 200.

In some embodiments of the present application, as shown in FIGs. 2 to 5, the welding assembly 300 may include a support frame 310, a first welding unit 320, and a second welding unit 330. The support frame 310 may be in transmission connection to the first driving unit 211, and the first welding unit 320 and the second welding unit 330 may be mounted on the support frame 310. In addition, the first welding unit 320 and the second welding unit 330 separately weld the plurality of tab plates 211a from both sides of the plurality of tab plates 211a.

Specifically, the first driving unit 211 may drive the first welding unit 320 and the second welding unit 330 to move by driving the support frame 310.

By mounting the first welding unit 320 and the second welding unit 330 on the support frame 310, the first driving unit 211 can simultaneously drive the first welding unit 320 and the second welding unit 330 to move toward the tab plates 211a.

Optionally, when the support base 100 transports the cell 20a to the pressing and welding station corresponding to the tab pressing structure 200 and the welding assembly 300, the plurality of tab plates 211a of the cell 20a can be located between the first welding unit 320 and the second welding unit 330. This enables the first welding unit 320 and the second welding unit 330 to simultaneously weld two side surfaces of the plurality of tab plates 211a, resulting in stronger welding of the plurality of tab plates 211a. Consequently, this enhances the welding effect of the plurality of tab plates 211a, and also increases the welding efficiency of the plurality of tab plates 211a.

In some embodiments of the present application, as shown in FIGs. 2 to 4, the first welding unit 320 may include a first welding head 321 and a first driving component 322. The first driving component 322 may be mounted on the support frame 310, the first driving component 322 is in transmission connection to the first welding head 321, and the first driving component 322 may be configured to drive the first welding head 321 to move toward or away from the support base 100, thereby being capable of moving toward or away from the cell 20a on the support base 100.

Specifically, in the process of welding the tab 21a, the first driving component 322 drives the support frame 310 to move the first welding unit 320 toward the plurality of tab plates 211a. Meanwhile, the first driving component 322 may be used to adjust the position of the first welding head 321 through transmission, such that the first welding head 321 can be precisely aligned with the plurality of tab plates 211a to weld the plurality of tab plates 211a, thereby improving the welding effect and efficiency of the welding assembly 300.

Optionally, as shown in FIGs. 2 to 4, the first driving component 322 may include a first cylinder 3221. The first cylinder 3221 is connected to the first welding head 321 and can drive the first welding head 321 to move relative to the tab 21a, such that the first welding head 321 can be aligned with the plurality of tab plates 211a and weld the plurality of tab plates 211a.

By configuring the first driving component 322 to be in transmission connection to the first welding head 321, the first welding head 321 can move independently under the transmission of the first driving component 322, such that the first welding unit 320 can adjust its position to align with one side of the plurality of tab plates 211a, thereby achieving precise welding.

In some embodiments, the welding assembly 300 may include, but is not limited to, an ultrasonic welding apparatus, a laser welding apparatus, an electric arc welding apparatus, an aluminothermic welding apparatus, or the like. In the welding assembly 300, energy such as an ultrasonic wave, a laser, or an electric arc may be emitted by the first welding head 321 and a second welding head 331 to weld the plurality of tab plates 211a, thereby sequentially fusing the plurality of tab plates 211a to form the tab part 21a.

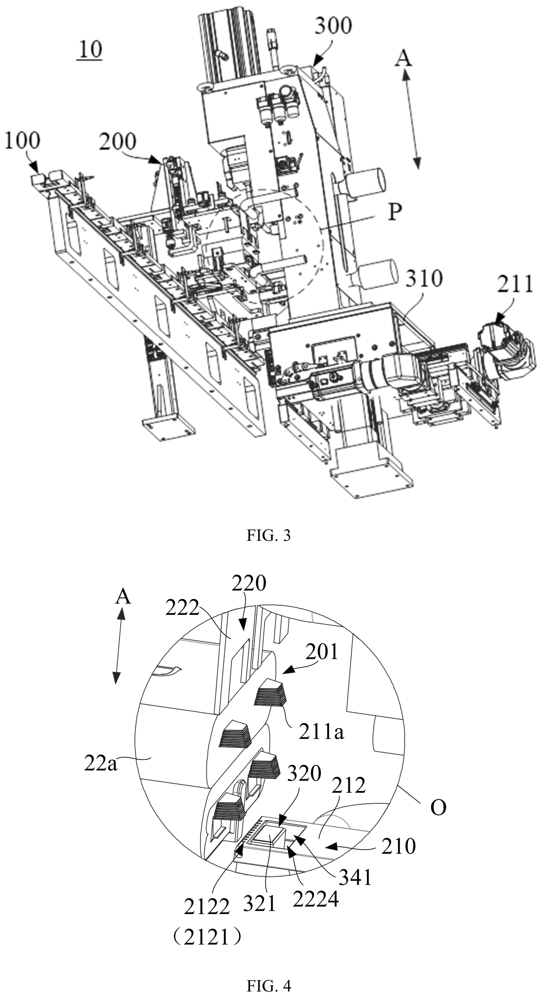

In some embodiments of the present application, as shown in FIG. 4, the first pressing plate 212 may be provided with a first through hole 2224 facing the second pressing plate 222, and the first driving component 322 may be configured to drive the end part of the first welding head 321 to enter the first through hole 2224 or move out of the first through hole 2224.

In some embodiments, the first pressing plate 212 may further include a blowing structure 2121. An air outlet 2122 of the blowing structure 2121 is disposed on a side of the first pressing plate 212 facing the second pressing plate 222, and is configured to smooth the tab plates 211a through air blowing.

Optionally, the first through hole 2224 in the first pressing plate 212 may correspond to the position of the tab plates 211a of the cell 20a, such that after entering the first through hole 2224, the first welding head 321 can be aligned with the plurality of tab plates 211a to achieve the precise welding of the plurality of tab plates 211a.

Optionally, the blowing structure 2121 may include an air outlet 2122, and the wind may blow out from the air outlet 2122. The air outlet 2122 may be disposed at the end part of the first welding head 321. In addition, in a direction perpendicular to the preset movement direction A, the air outlet 2122 may be closer to the cell 20a than the first welding head 321.

Moreover, the disposition position of the air outlet 2122 may correspond to the root portion of the tab plate 211a, such that the wind can blow out from the air outlet 2122, and the tab plate 211a is smoothed from the root portion of the tab plate 211a, thereby further regularizing the overall shape of the tab plate 211a.

In some embodiments of the present application, as shown in FIGs. 2 to 5, the second welding unit 330 may include a second welding head 331 and a second driving component 332. The second driving component 332 is in transmission connection to the second welding head 331, and the second driving component 332 may be configured to drive the second welding head 331 to move toward or away from the support base 100.

Optionally, the second driving component 332 may be mounted on the support frame 310, such that the first driving unit 211 can simultaneously drive the second welding head 331 and the second driving component 332 to move toward the plurality of tab plates 211a when driving the support frame 310. Subsequently, the second driving component 332 may drive the second welding head 331 to move toward and align with the plurality of tab plates 211a, so as to weld the plurality of tab plates 211a. In addition, upon the completion of welding, the second driving component 332 can drive the second welding head 331 to move away from the plurality of tab plates 211a, thereby avoiding interference with the subsequent transport of the cell 20a.

Optionally, the second driving component 332 may include a second cylinder 3321. The second cylinder 3321 is connected to the second welding head 331 and can drive the second welding head 331 to move relative to the plurality of tab plates 211a, such that the second welding head 331 can be aligned with the plurality of tab plates 211a and weld the plurality of tab plates 211a.

In different embodiments, the second pressing plate 222 may be configured in various shapes.

For example, in some embodiments, as shown in FIG. 5, the middle portion of the second pressing plate 222 proximal to the plurality of tab plates 211a may move away from the first pressing plate 212 in the preset movement direction A and be higher than the portions on both sides, such that the portion of the second pressing plate 222 proximal to the plurality of tab plates 211a presents a "U"-shaped structure. In this way, when the second pressing plate 222 presses the plurality of tab plates 211a, the middle portion may contact and press the tab plates 211a, and the portions on both sides may gather the root portions of the plurality of tab plates 211a, thereby regularizing the shape of the plurality of tab plates 211a from both sides of the plurality of tab plates 211a.

In some other embodiments of the present application, as shown in FIG. 8, the second pressing plate 222 may be configured such that the end part thereof proximal to the plurality of tab plates 211a extends toward the direction of the welding assembly 300 and is bent to form a pressing portion. The pressing portion is configured to press and gather the plurality of tab plates 211a.

Optionally, the second pressing plate 222 is provided with a second through hole 2123 facing the first pressing plate 212. The second driving component 332 is configured to drive the end part of the second welding head 331 to enter the second through hole 2123 or move out of the second through hole 2123.

Optionally, the second through hole 2123 in the second pressing plate 222 corresponds to one side of the plurality of tab plates 211a, such that after entering the second through hole 2123, the second welding head 331 can correspond to one side surface of the plurality of tab plates 211a and weld the plurality of tab plates 211a.

By means of the above configuration, after the second pressing plate 222 presses and gathers the plurality of tab plates 211a, the second welding head 331 can be driven by the second driving component 332 to enter the second through hole 2123, such that after shaping the plurality of tab plates 211a, the second welding head 331 can be used to weld the plurality of tab plates 211a. In addition, during the welding process, the second pressing plate 222 can continuously press the plurality of tab plates 211a, such that the plurality of tab plates 211a are not easily deformed, thereby improving the welding effect of the plurality of tab plates 211a.

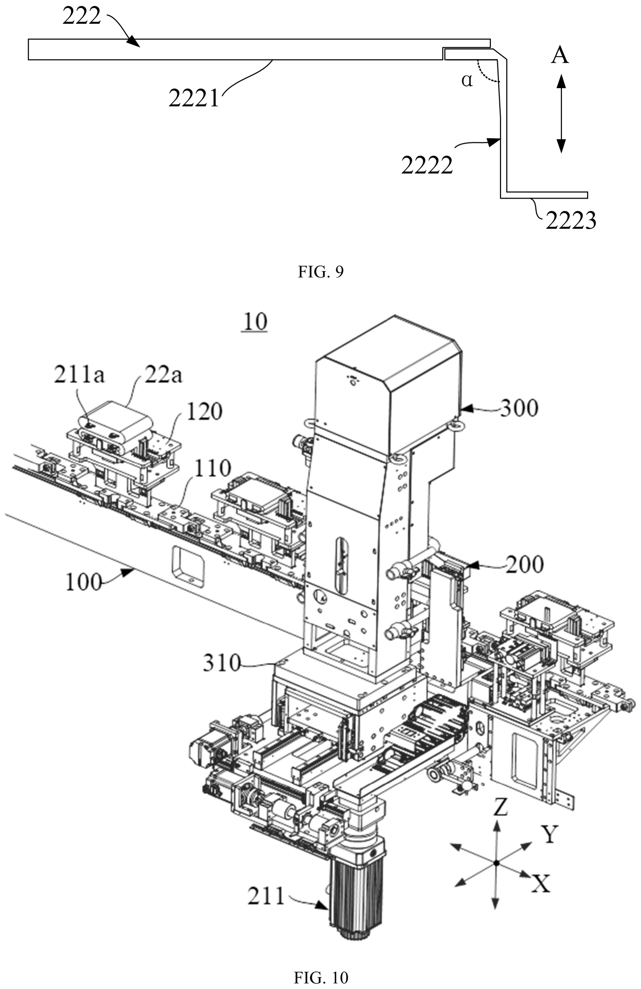

In some embodiments of the present application, as shown in FIGs. 8 and 9, the second pressing plate 222 may include a first mating surface 2221, a second mating surface 2222, and a third mating surface 2223. The second mating surface 2222 and the first mating surface 2221 may be arranged at an obtuse angle, and the third mating surface 2223 may be arranged to be bent relative to the second mating surface 2222. The first mating surface 2221 may be configured to press against the cell body 22a of the cell 20a. The second mating surface 2222 may be configured to cover a part of the end surface of the cell body 22a provided with the tab plates 211a. The third mating surface 2223 may be configured to press the plurality of tab plates 211a against the first pressing plate 212.

Optionally, the first mating surface 2221, the second mating surface 2222, and the third mating surface 2223 may be adapted to the shape of the cell body 22a of the cell 20a and the position of the plurality of tab plates 211a, so as to facilitate the positioning of the plurality of corresponding tab plates 211a by the second pressing plate 222 based on the cell body 22a of the cell 20a, thereby more effectively pressing the plurality of tab plates 211a.

Optionally, the first mating surface 2221 may be perpendicular to the preset movement direction A, and a part of the second mating surface 2222 may be arranged to form an obtuse angle with the first mating surface 2221. The included angle formed between the second mating surface 2222 and the first mating surface 2221 may be shown as the angle α in FIG. 9, where 90° < α < 180°. In other words, in the preset movement direction A, the second mating surface 2222 may be arranged in an inclined manner.

In this way, when the second pressing plate 222 moves toward the cell 20a, if the position of the cell 20a is not aligned with the position of the second pressing plate 222, the inclined second mating surface 2222 may guide the cell 20a or the second pressing plate 222 to adjust their positions, such that the first mating surface 2221 of the second pressing plate 222 can accurately press the cell body 22a of the cell 20a, and the third mating surface 2223 can press and gather the plurality of tab plates 21a.

In some embodiments of the present application, as shown in FIGs. 4 to 5, the welding assembly 300 may further include a first dust extraction unit 340 and a second dust extraction unit 350. The first dust extraction unit 340 and the second dust extraction unit 350 are configured to extract dust from the welding region of the first welding unit 320 and the welding region of the second welding unit 330, respectively.

The welding region refers to a region that can be affected by the welding head during use, i.e., the region that can be covered by the energy emitted by the welding head, such as thermal energy and ultrasonic energy. The plurality of tab plates 211a can be welded together in this welding region. Therefore, performing dust extraction in the welding region of the first welding unit 320 and the welding region of the second welding unit 330 can reduce the occurrence of metal impurities or tab debris during the fusion of the plurality of tab plates 211a in the welding region, thereby improving the welding effect of the tab plates 211a.

Optionally, the first dust extraction unit 340 may be further provided with a first dust extraction port 341. The first dust extraction port 341 may be disposed in the first through hole 2224 of the first pressing plate 212, and the first welding head 321 may be disposed on a side of the first dust extraction port 341 proximal to the cell 20a. The projection area of the first dust extraction port 341 in the preset movement direction A may be greater than that of the second welding head 331, such that the first dust extraction port 341 includes not only a space for accommodating the first welding head 321, but also a dust extraction channel. This facilitates dust extraction, via the dust extraction channel, in the welding region of the first welding unit 320 when the first welding head 321 is used to weld the tab 21a.

Optionally, the second dust extraction unit 350 may be provided with a second dust extraction port 351. The second welding head 331 may be disposed on a side of the second dust extraction port 351 proximal to the cell 20a. The projection area of the second dust extraction port 351 in the preset movement direction A may be greater than that of the second welding head 331, such that the second dust extraction port 351 includes not only a space for accommodating the second welding head 331, but also a dust extraction channel. This facilitates dust extraction, via the dust extraction channel, in the welding region of the second welding unit 330 when the second welding head 331 is used to weld the tab 21a.

By providing the first dust extraction unit 340 and the second dust extraction unit 350 for the welding region of the first welding unit 320 and the welding region of the second welding unit 330, respectively, debris and dust generated in the welding region can be absorbed, thereby reducing the adsorption of debris and dust on the plurality of tab plates 211a that could affect the formation of the tab part 21a.

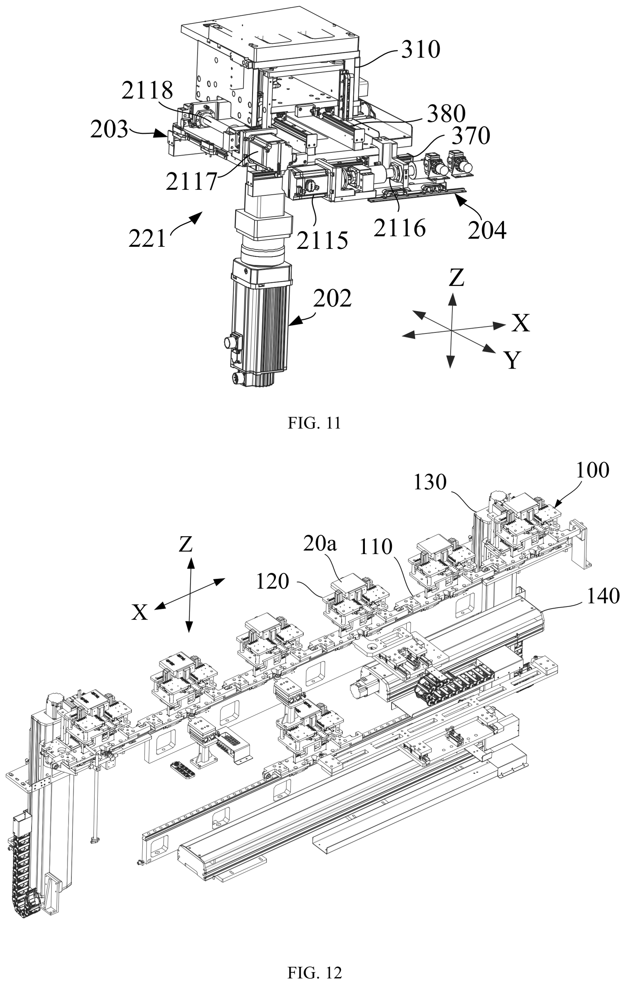

In some embodiments of the present application, as shown in FIGs. 10 and 11, the first driving unit 211 may be configured to drive the first pressing plate 212 in three-dimensional directions. Optionally, the first driving unit 211 may also drive the support frame 310 in three-dimensional directions at the same time.

Optionally, the first pressing plate 212 may be disposed on the support frame 310, and the first driving unit 211 may drive the first pressing plate 212 to move by driving the support frame 310.

Optionally, one of the three-dimensional directions may be the preset movement direction A, such that the support frame 310 can move up and down in the preset movement direction A to move toward the cell 20a. The other two directions of the three-dimensional directions may be perpendicular directions of the preset movement direction A, and the two perpendicular directions are also perpendicular to each other, such that the first driving unit 211 can drive the support frame 310 to move left and right or back and forth to move toward or away from the cell 20a, thereby facilitating the alignment of the welding assembly 300 and the first pressing plate 212 with the tab 21a of the cell 20a, and precisely pressing and welding the tab 21a.

In some embodiments, as shown in FIGs. 10 and 11, the first driving unit 211 may include a first driving assembly 202, a second driving assembly 203, and a third driving assembly 204. The first driving assembly 202 is in transmission connection to the first pressing plate 212 and is configured to drive the first pressing plate 212 to move in a first direction. The second driving assembly 203 is in transmission connection to the first driving assembly 202 and is configured to drive the first driving assembly 202 to move in a second direction. The third driving assembly 204 is in transmission connection to the second driving assembly 203 and is configured to drive the second driving assembly 203 to move in a third direction, so as to move toward or away from the support base 100. The first direction, the second direction, and the third direction are perpendicular to each other.

As shown in FIGs. 10 and 11, the third direction, the second direction, and the first direction may correspond to the three directions X, Y, and Z shown in FIGs. 10 and 11, respectively, and any two of the three directions X, Y, and Z are perpendicular to each other. The direction Z may be the preset movement direction A.

Optionally, the first motor 2111, the first reducer 2112, the first lead screw 2113, and the first floating joint 2114 in the above embodiments may all be disposed in the first driving assembly 202.

Optionally, the second driving assembly 203 may include a second motor 2115 and a second lead screw 2116. The third driving assembly 204 may include a third motor 2117 and a third lead screw 2118.

The second motor 2115 may be connected to the second lead screw 2116, and the second motor 2115 may be configured to provide electric energy to the second lead screw 2116. The second lead screw 2116 may be connected to the support frame 310, and may be configured to drive the first driving assembly 202 to reciprocate linearly in the second direction Y perpendicular to the first direction Z.

The third motor 2117 may be connected to the third lead screw 2118. The third motor 2117 may be configured to provide electric energy to the third lead screw 2118. The third lead screw 2118 may be connected to the support frame 310, and may be configured to drive the second driving assembly 203 to reciprocate linearly in the third direction X perpendicular to the first direction Z and the second direction Y.

Optionally, as shown in FIGs. 6 and 11, a first linear slide rail 360, a second linear slide rail 370, and a third linear slide rail 380 may be disposed between the support frame 310 and the first driving unit 211. The first linear slide rail 360 can constrain the movement of the support frame 310 to the Z direction, the second linear slide rail 370 can constrain the movement of the support frame 310 to the X direction, and the third linear slide rail 380 can constrain the movement of the support frame 310 to the Y direction.

In other embodiments, the second driving unit 221 may also be configured to drive the second pressing plate 222 in three-dimensional directions. Certainly, in other embodiments, the respective driving component units may also be configured to drive the pressing plate or the welding head in other directions.

In some embodiments of the present application, as shown in FIGs. 10 and 12, the support base 100 may include a conveying track 110 and a cell fixture 120. The cell fixture 120 is mounted on the conveying track 110, and the conveying track 110 may be configured to convey the cell fixture 120 to the tab pressing structure 200 and convey the cell fixture 120 away from the tab pressing structure 200. The cell fixture 120 may be configured to support and fix the cell body 22a of the cell 20a.

Optionally, the support base 100 may further include a vertical driving module 130 and a horizontal driving module 140. The vertical driving module 130 may be configured to drive the cell fixture 120 to move the cell 20a in the first direction Z, and the horizontal driving module 140 may be configured to drive the cell fixture 120 to move the cell 20a in the third direction X or the second direction Y.

By providing the conveying track 110 and the cell fixture 120, the cell 20a can be conveniently fixed on the conveying track 110, which makes the cell 20a less likely to displace and fall off. This configuration also facilitates the conveyance of the cell 20a to a welding station corresponding to the tab welding mechanism 10, thereby enabling the convenient welding of the tab plates 211a.

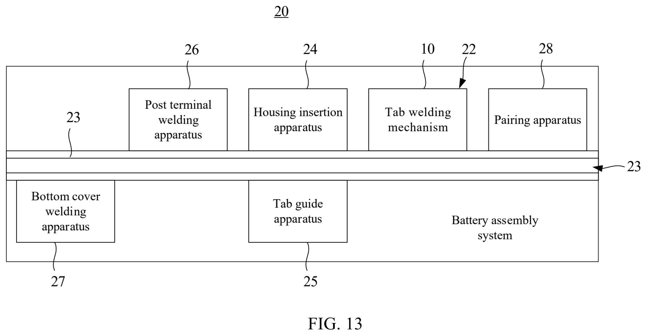

In some embodiments of the present application, as shown in FIG. 13, the battery assembly system 20 includes the tab welding mechanism 10 according to the above embodiments.

In some embodiments, as shown in FIG. 1, the battery 1 may include a housing 10a, a bottom cover 30a, and a cell 20a. The housing 10a may be provided with an open end 12a, and a post terminal 15a is disposed on a wall of the housing 10a that may be opposite to the open end 12a. The post terminal 15a may be provided with a through hole 14a, and the housing 10a and the bottom cover 30a are connected to form an accommodating cavity 11a in communication with the through hole 14a. An active substance-coated part of the cell 20a is disposed in the housing 10a, and a tab part 21a of the cell 20a passes through the through hole 14a and is connected to a side of the post terminal 15a facing away from the accommodating cavity 11a.

As shown in FIG. 13, the battery assembly system 20 further includes a conveying device 21 and an assembly device 22. The conveying device 21 is configured to convey structures to be assembled to each station of the assembly device 22. The stations of the assembly device 22 at least include the tab welding mechanism 10. The tab welding mechanism 10 is configured to weld the plurality of tab plates 211a of the cell body to form the tab part 21a.

It should be noted that in this embodiment, the conveying device 21 may include a conveying line 23. The conveying line 23 may be a conveying structure formed by motor-driven conveying rollers in cooperation with a conveying belt, or may be a conveying structure formed by motor-driven articulated conveying chain links, or may be an AGV conveying trolley, as long as the conveying line can perform conveyance in at least one direction, and support and ensure the stability of the structures to be assembled.

The tab welding mechanism 10 is intended to pre-weld the plurality of tab plates 211a to form the tab part 21a. The tab welding mechanism is optionally an ultrasonic welding device, as long as the tab welding mechanism can ensure that the plurality of tab plates 211a are welded in a stable clamped state.

In some embodiments, the conveying device 21 may be linked with the conveying track 110 of the tab welding mechanism 10 to convey the cell 20a. For example, the conveying device 21 is an AGV conveying trolley, and the conveying device 21 may transmit the cell 20a from other stations to the conveying track 110 of the tab welding mechanism 10, such that the conveying track 110 can further transmit the cell 20a to the position corresponding to the tab pressing structure 200 and the welding assembly 300, thereby facilitating the pressing, gathering, and welding of the tab plates 211a in the cell 20a by the tab welding mechanism 10 to form the tab part 21a.

Alternatively, the conveying device 21 may be a conveying line 23. The conveying line 23 is connected to the conveying track 110. The conveying line 23 may convey the cell 20a to the conveying track 110, and then the conveying track 110 further conveys the cell 20a to the position corresponding to the tab pressing structure 200 and the welding assembly 300.

Certainly, in other embodiments, when the conveying device 21 is a conveying line 23, the tab welding mechanism 10 may not be provided with the conveying track 110, and the conveying line 23 may be directly arranged corresponding to the tab welding mechanism 10. The conveying line 23 can transmit the cell 20a to the position corresponding to the tab pressing structure 200 and the welding assembly 300, thereby facilitating the pressing, gathering, and welding of the tab plates 211a in the cell 20a by the tab welding mechanism 10 to form the tab part 21a.

In some embodiments, as shown in FIG. 13, the station of the assembly device 22 may further include a housing insertion apparatus 24, a tab guide apparatus 25, a post terminal welding apparatus 26, and a bottom cover welding apparatus 27. The conveying device 21 may be configured to sequentially convey the cell 20a having the tab part 21a formed thereon to the housing insertion apparatus 24, the tab guide apparatus 25, the post terminal welding apparatus 26, and the bottom cover welding apparatus 27.

The housing insertion apparatus 24 may be configured to insert the cell body 22a into the housing 10a from the open end 12a. The tab guide apparatus 25 may be configured to clamp the tab part 21a to pass through the through hole 14a when the cell body 22a is inserted into the housing 10a. The post terminal welding apparatus 26 may be configured to weld the tab part 21a that passes through the through hole 14a to the side of the post terminal 15a facing away from the accommodating cavity 11a. The bottom cover welding apparatus 27 may be configured to weld the bottom cover 30a to the open end 12a of the housing 10a.

The housing insertion apparatus 24 may be a pushing mechanism or a clamping mechanism, as long as the housing insertion apparatus can stably move the cell body 22a toward the open end 12a of the housing 10a and enter the accommodating cavity 11a through the open end 12a. Similarly, the tab guide apparatus 25 may adopt a clamping structure or a guiding structure, as long as the tab guide apparatus can guide the tab part 21a to smoothly pass through the through hole 14a without interfering with the housing 10a. The post terminal welding apparatus 26 is intended to weld the tab part 21a and the post terminal 15a, and is optionally a laser welding device. The bottom cover welding apparatus 27 is intended to weld the circumferential edge between the bottom cover 30a and the open end 12a of the housing 10a, and is also a laser welding device.

By disposing the housing insertion apparatus 24, the tab guide apparatus 25, the post terminal welding apparatus 26, and the bottom cover welding apparatus 27 in the battery assembly system 20, the process of assembling the battery 1 in the battery assembly system 20 can be smoother, thereby simplifying the assembly process of the battery 1, and improving the standardization and intelligence of the assembly process of the battery 1.

In addition, the assembly device 22 includes, but is not limited to, the tab welding mechanism 10, the housing insertion apparatus 24, the tab guide apparatus 25, the post terminal welding apparatus 26, and the bottom cover welding apparatus 27. Exemplarily, when there are a plurality of cell bodies 22a, such as two cell bodies, the assembly device 22 further includes a pairing apparatus 28. The pairing apparatus is configured to stack the plurality of cell bodies 22a, such that the tab plates 211a of the two cell bodies 22a are substantially opposite to each other. This facilitates the conveyance of the paired cell bodies 22a by the conveying structure to the tab welding mechanism 10a for welding the tab plates 211a, thereby facilitating the formation of the tab part 21a. Further exemplarily, to ensure the reliability of the assembly process of the battery 1, dust removal and NG detection stations may further be added between any two adjacent stations. This is not limited in this embodiment.

According to some embodiments of the present application, as shown in FIGs. 2 to 12, the tab welding mechanism 10 may include a base platform 11, a support base 100, a tab pressing structure 200, and a welding assembly 300. The support base 100 is disposed on the base platform 11 and is configured to support and fix the cell body 22a of the cell 20a. The tab pressing structure 200 is disposed on the base platform 11 and is configured to be capable of moving toward the support base 100, so as to press and gather the plurality of stacked tab plates 211a of the cell 20a. The welding assembly 300 is disposed on the base platform 11 and is configured to be capable of moving toward the support base 100, so as to weld the plurality of gathered tab plates 211a to form a tab part 21a. The tab pressing structure 200 includes a first assembly 210 and a second assembly 220 movably disposed on the base platform 11 separately. The first assembly 210 and the second assembly 220 may be configured to move toward or away from each other. A clamping cavity 201 may be formed when the first assembly 210 and the second assembly 220 move toward each other. The first assembly 210 and the second assembly 220 are configured to clamp the plurality of tab plates 211a in the clamping cavity 201, so as to press and gather the plurality of tab plates 211a. The first assembly 210 includes a first driving unit 211 and a first pressing plate 212. The first driving unit 211 is mounted on the base platform 11, the first driving unit 211 may be in transmission connection to the first pressing plate 212, and the first driving unit 211 may be configured to drive the first pressing plate 212 to move toward or away from the support base 100. The second assembly 220 includes a second driving unit 221 and a second pressing plate 222. The second driving unit 221 is mounted on the base platform 11, and the second driving unit 221 is configured to drive the second pressing plate 222 to move toward or away from the support base 100. The first driving unit 211 and the second driving unit 221 are located on both sides of the support base 100, respectively, such that the first assembly 210 and the second assembly 220 can move toward or away from each other to form the clamping cavity 201 with an adjustable dimension. The welding assembly 300 includes a support frame 310, a first welding unit 320, and a second welding unit 330. The support frame 310 may be in transmission connection to the first driving unit 211, and the first welding unit 320 and the second welding unit 330 may be mounted on the support frame 310. In addition, the first welding unit 320 and the second welding unit 330 separately weld the plurality of tab plates 211a from both sides of the plurality of tab plates 211a. The first welding unit 320 includes a first welding head 321 and a first driving component 322. The first driving component 322 is mounted on the support frame 310, the first welding head 321 is mounted on the first driving component 322, the first driving component 322 is in transmission connection to the first welding head 321, and the first driving component 322 may be configured to drive the first welding head 321 to move toward or away from the support base 100. The first pressing plate 212 may be provided with a first through hole 2224 facing the second pressing plate 222, and the first driving component 322 may be configured to drive the end part of the first welding head 321 to enter the first through hole 2224 or move out of the first through hole 2224. And/or the first pressing plate 212 may further include a blowing structure 2121. An air outlet 2122 of the blowing structure 2121 is disposed on a side of the first pressing plate 212 facing the second pressing plate 222, and is configured to smooth the tab plates 211a through air blowing. The second welding unit 330 includes a second welding head 331 and a second driving component 332. The second driving component 332 is in transmission connection to the second welding head 331, and the second driving component 332 is configured to drive the second welding head 331 to move toward or away from the moving support base 100. The second pressing plate 222 is provided with a second through hole 2123 facing the first pressing plate 212. The second driving component 332 is configured to drive the end part of the second welding head 331 to enter the second through hole 2123 or move out of the second through hole 2123. The welding assembly 300 further includes a first dust extraction unit 340 and a second dust extraction unit 350. The first dust extraction unit 340 and the second dust extraction unit 350 are configured to extract dust from the welding region of the first welding unit 320 and the welding region of the second welding unit 330, respectively. The first driving unit 211 is configured to drive the first pressing plate 212 in three-dimensional directions. The first driving unit 211 may include a first driving assembly 202, a second driving assembly 203, and a third driving assembly 204. The first driving assembly 202 is in transmission connection to the first pressing plate 212 and is configured to drive the first pressing plate 212 to move in a first direction Z. The second driving assembly 203 is in transmission connection to the first driving assembly 202 and is configured to drive the first driving assembly 202 to move in a second direction Y. The third driving assembly 204 is in transmission connection to the second driving assembly 203 and is configured to drive the second driving assembly 203 to move in a third direction X, so as to move toward or away from the support base 100. The first direction Z, the second direction Y, and the third direction X are perpendicular to each other. The second pressing plate 222 includes a first mating surface 2221, a second mating surface 2222, and a third mating surface 2223. The second mating surface 2222 and the first mating surface 2221 are arranged at an obtuse angle, and the third mating surface 2223 is arranged to be bent relative to the second mating surface 2222. The first mating surface 2221 is configured to press against the cell body 22a of the cell 20a. The second mating surface 2222 is configured to cover a part of the end surface of the cell body 22a provided with the tab plates 211a. The third mating surface 2223 may be configured to press the plurality of tab plates 211a against the first pressing plate 212. The support base 100 includes a conveying track 110 and a cell fixture 120. The cell fixture 120 is mounted on the conveying track 110, and the conveying track 110 is configured to convey the cell fixture 120 to the tab pressing structure 200 and convey the cell fixture 120 away from the tab pressing structure 200. The cell fixture 120 is configured to support and fix the cell body 22a of the cell 20a.

In some embodiments of the present application, as shown in FIGs. 1 and 13, the battery assembly system 20 includes the tab welding mechanism 10 according to the above embodiments. The battery 1 may include a housing 10a, a bottom cover 30a, and a cell 20a. The housing 10a may be provided with an open end 12a, and a post terminal 15a is disposed on a wall of the housing 10a that may be opposite to the open end 12a. The post terminal 15a may be provided with a through hole 14a, and the housing 10a and the bottom cover 30a are connected to form an accommodating cavity 11a in communication with the through hole 14a. An active substance-coated part of the cell 20a is disposed in the housing 10a, and a tab part 21a of the cell 20a passes through the through hole 14a and is connected to a side of the post terminal 15a facing away from the accommodating cavity 11a. The battery assembly system 20 further includes a conveying device 21 and an assembly device 22. The conveying device 21 is configured to convey structures to be assembled to each station of the assembly device 22. The stations of the assembly device 22 at least include the tab welding mechanism 10. The station of the assembly device 22 is configured to weld the plurality of tab plates 211a of the cell body to form the tab part 21a. The battery assembly system 20 further includes a housing insertion apparatus 24, a tab guide apparatus 25, a post terminal welding apparatus 26, and a bottom cover welding apparatus 27. The conveying device 21 may be configured to sequentially convey the cell 20a having the tab part 21a formed thereon to the housing insertion apparatus 24, the tab guide apparatus 25, the post terminal welding apparatus 26, and the bottom cover welding apparatus 27. The housing insertion apparatus 24 is configured to insert the cell body 22a into the housing 10a from the open end 12a. The tab guide apparatus 25 is configured to clamp the tab part 21a to pass through the through hole 14a when the cell body 22a is inserted into the housing 10a. The post terminal welding apparatus 26 is configured to weld the tab part 21a that passes through the through hole 14a to the side of the post terminal 15a facing away from the accommodating cavity 11a. The bottom cover welding apparatus 27 is configured to weld the bottom cover 30a to the open end 12a of the housing 10a.

In summary, according to the present application, the tab welding mechanism 10 is provided not only with the welding assembly 300, but also with the support base 100 and the tab pressing structure 200. This design enables the tab welding mechanism 10 not only to weld the tab plates 211a of the cell 20a, but also to press and gather the tab plates 211a to compact the tab plates 211a before welding. Thus, the spacing between the tab plates 211a is reduced to compact the tab plates 211a and facilitate the welding of the tab 21a, thereby reducing the difficulty of welding and improving the yield rate of the cell 20a. The support base 100 can transport the cell 20a to the position corresponding to the tab pressing structure 200 or the welding assembly 300, thereby facilitating the pressing and welding of the tab plates 211a of the cell 20a, and also facilitating the transport of the cell 20a to other positions after the tab plates 211a are pressed and welded to form the tab part.

The above descriptions are merely embodiments of the present application and do not thereby limit the patent scope of the present application. Any equivalent structures or equivalent process changes made based on the content of the specification and drawings of the present application, or any direct or indirect application in other related technical fields, shall likewise be included within the scope of patent protection of the present application.

## Claims

1. A tab welding mechanism, comprising:
a base platform;
a support base, disposed on the base platform and configured to support and fix a cell body of a cell;
a tab pressing structure, disposed on the base platform and configured to be capable of moving toward the support base, so as to press and gather a plurality of stacked tab plates of the cell; and
a welding assembly, disposed on the base platform and configured to be capable of moving toward the support base, so as to weld the plurality of gathered tab plates to form a tab part.

2. The tab welding mechanism according to claim 1, wherein
the tab pressing structure comprises a first assembly and a second assembly movably disposed on the base platform separately, wherein the first assembly and the second assembly are configured to be capable of moving toward or away from each other, a clamping cavity is formed when the first assembly and the second assembly move toward each other, and the first assembly and the second assembly are configured to clamp the plurality of tab plates in the clamping cavity, so as to press and gather the plurality of tab plates.

3. The tab welding mechanism according to claim 2, wherein
the first assembly comprises a first driving unit and a first pressing plate, wherein the first driving unit is mounted on the base platform, the first driving unit is in transmission connection to the first pressing plate, and the first driving unit is configured to drive the first pressing plate to move toward or away from the support base.

4. The tab welding mechanism according to claim 3, wherein
the second assembly comprises a second driving unit and a second pressing plate, wherein the second driving unit is mounted on the base platform, the second driving unit is in transmission connection to the second pressing plate, and the second driving unit is configured to drive the second pressing plate to move toward or away from the support base,
wherein the first driving unit and the second driving unit are located on both sides of the support base, respectively, such that the first assembly and the second assembly are capable of moving toward or away from each other to form the clamping cavity with an adjustable dimension.

5. The tab welding mechanism according to claim 4, wherein
the welding assembly comprises a support frame, a first welding unit, and a second welding unit, wherein the support frame is in transmission connection to the first driving unit, the first welding unit and the second welding unit are mounted on the support frame, and the first welding unit and the second welding unit separately weld the plurality of tab plates from both sides of the plurality of tab plates.

6. The tab welding mechanism according to claim 5, wherein
the first welding unit comprises a first welding head and a first driving component, wherein the first driving component is mounted on the support frame, and the first driving component is in transmission connection to the first welding head to drive the first welding head to move toward or away from the support base.

7. The tab welding mechanism according to claim 6, wherein
the first pressing plate is provided with a first through hole facing the second pressing plate, and the first driving component is configured to drive an end part of the first welding head to enter the first through hole or move out of the first through hole; and/or the first pressing plate further comprises a blowing structure, and an air outlet of the blowing structure is disposed on a side of the first pressing plate facing the second pressing plate to smooth the tab plates through air blowing.

8. The tab welding mechanism according to claim 5, wherein
the second welding unit comprises a second welding head and a second driving component, wherein the second driving component is mounted on the support frame, and the second driving component is in transmission connection to the second welding head to drive the second welding head to move toward or away from the support base.

9. The tab welding mechanism according to claim 8, wherein
the second pressing plate is provided with a second through hole facing the first pressing plate, and the second driving component is configured to drive an end part of the second welding head to enter the second through hole or move out of the second through hole.

10. The tab welding mechanism according to claim 5, wherein
the welding assembly further comprises a first dust extraction unit and a second dust extraction unit, wherein the first dust extraction unit and the second dust extraction unit are configured to extract dust from a welding region of the first welding unit and a welding region of the second welding unit, respectively.

11. The tab welding mechanism according to claim 3, wherein
the first driving unit is configured to drive the first pressing plate in three-dimensional directions.

12. The tab welding mechanism according to claim 11, wherein
the first driving unit comprises a first driving assembly, a second driving assembly, and a third driving assembly, wherein the first driving assembly is in transmission connection to the first pressing plate to drive the first pressing plate to move in a first direction; the second driving assembly is in transmission connection to the first driving assembly to drive the first driving assembly to move in a second direction; and the third driving assembly is in transmission connection to the second driving assembly to drive the second driving assembly to move in a third direction, so as to move toward or away from the support base,
wherein the first direction, the second direction, and the third direction are perpendicular to each other.

13. The tab welding mechanism according to claim 4, wherein
the second pressing plate comprises a first mating surface, a second mating surface, and a third mating surface, wherein the second mating surface and the first mating surface are arranged at an obtuse angle, and the third mating surface is arranged to be bent relative to the second mating surface; and
the first mating surface is configured to press against the cell body of the cell, the second mating surface is configured to cover a part of an end surface of the cell provided with the tab plates, and the third mating surface is configured to press the plurality of tab plates against the first pressing plate.

14. The tab welding mechanism according to any one of claims 1 to 13, wherein
the support base comprises a conveying track and a cell fixture, wherein the conveying track is disposed on the base platform, the cell fixture is mounted on the conveying track, and the conveying track is configured to convey the cell fixture to the tab pressing structure and convey the cell fixture away from the tab pressing structure; and
the cell fixture is configured to support and fix the cell body of the cell.

15. A battery assembly system, comprising the tab welding mechanism according to any one of claims 1 to 14.

16. The battery assembly system according to claim 15, wherein the battery comprises a housing, a bottom cover, and a cell, wherein the housing is provided with an open end, a post terminal is disposed on a wall of the housing opposite to the open end, the post terminal is provided with a through hole, and the housing and the bottom cover are connected to form an accommodating cavity in communication with the through hole; and an active substance-coated part of the cell is disposed in the housing, and a tab part of the cell passes through the through hole and is connected to a side of the post terminal facing away from the accommodating cavity; and
the battery assembly system further comprises a conveying device and an assembly device, wherein the conveying device is configured to convey structures to be assembled to each station of the assembly device, and the stations of the assembly device at least comprise the tab welding mechanism,
wherein the tab welding mechanism is configured to weld a plurality of tab plates of the cell to form the tab part.

17. The battery assembly system according to claim 16, wherein the stations of the assembly device further comprise a housing insertion apparatus, a tab guide apparatus, a post terminal welding apparatus, and a bottom cover welding apparatus,
wherein the conveying device is configured to sequentially convey the cell having the tab part formed thereon to the housing insertion apparatus, the tab guide apparatus, the post terminal welding apparatus, and the bottom cover welding apparatus, wherein the housing insertion apparatus is configured to insert the cell into the housing from the open end; the tab guide apparatus is configured to clamp the tab part to pass through the through hole when the cell is inserted into the housing; the post terminal welding mechanism is configured to weld the tab part that passes through the through hole to the side of the post terminal facing away from the accommodating cavity; and the bottom cover welding apparatus is configured to weld the bottom cover to the open end of the housing.
